# EUROPÄISCHE PATENTSCHRIFT

(11) **EP 2 421 083 B1**
(45) Veröffentlichungstag und Bekanntmachung des Hinweises auf die Patenterteilung: **10.10.2018**
(21) Anmeldenummer: 11006521.6
(22) Anmeldetag: 08.08.2011
(51) Int. Cl.: H01M 10/46, H01M 10/44, H01M 10/615, H01M 10/657, H02J 7/00

(54) **VERFAHREN UND VORRICHTUNG ZUM LADEN EINES WIEDERAUFLADBAREN AKKUMULATORS**
METHOD AND DEVICE FOR CHARGING A RECHARGEABLE BATTERY
PROCÉDÉ ET DISPOSITIF DESTINÉS AU CHARGEMENT D'UN ACCUMULATEUR RECHARGEABLE

(30) Priorität: 16.08.2010 DE 102010034439
(43) Veröffentlichungstag der Anmeldung: 22.02.2012
(73) Patentinhaber: GS Elektromedizinische Geräte G. Stemple GmbH, 86916 Kaufering (DE)
(72) Erfinder: Stemple, Günter, 86916 Kaufering (DE)
(74) Vertreter: Eisenführ Speiser

(56) Entgegenhaltungen:
- DE-A1- 3 620 041
- JP-A- 8 308 129
- JP-A- 11 150 885
- JP-A- 2004 362 949
- US-A- 4 650 729
- US-A- 5 864 220

## Beschreibung

Die Erfindung betrifft ein Verfahren nach dem Oberbegriff des Patentanspruchs 1 und eine Vorrichtung nach dem Oberbegriff des Patentanspruches 3. Ein derartiges Verfahren und eine derartige Vorrichtung zum Laden eines wiederaufladbaren Akkumulators, welcher als Starterbatterie in einem Kraftfahrzeug verwendet werden kann, sind aus US 4,650,729 A bekannt. Um die für den Start des Fahrzeugmotors benötigte Batteriekapazität zu gewährleisten, wird beim bekannten Verfahren, falls erforderlich, der Batterieelektrolyt auf die für den Motorstart erforderliche Temperatur mittels einer Heizeinrichtung gebracht oder die Batterie aufgeladen. Sowohl die Beheizung und Ladung der Batterie erfolgt über einen gemeinsamen Versorgungsstromkreis in welchem ein Wechselschalter angeordnet ist. Der Wechselschalter dient zum Umschalten zwischen Beheizung und Ladung der Batterie und wird nach dem Beheizen oder Aufladen jeweils in eine Ausschaltposition gebracht.
Aufgrund der chemischen Eigenschaften bestimmter Akkumulatorzellen, insbesondere von Li-Ionenzellen oder anderen Zellen wie NiCd-Zellen, ist es erforderlich, den Ladevorgang der Akkumulatorzellen innerhalb eines bestimmten Temperaturbereichs vorzunehmen, um eine Schädigung der Akkumulatorzellen zu vermeiden.
Aus DE 36 20 041 A1 ist eine Ladeanordnung für Akkumulatoren, insbesondere NiCd-Akkumulatoren, bekannt, bei der mit einem Temperaturfühler die Temperatur der Akkumulatorzellen gemessen wird und der Ladevorgang in Abhängigkeit von der gemessenen Temperatur freigegeben oder gesperrt wird.
Aus WO 96/17397 ist ein Verfahren und eine Vorrichtung zur Steuerung der Akkumulatortemperatur während des Lade- und Entladevorgangs bekannt. Dabei wird davon ausgegangen, dass während des Ladevorgangs der Ladestrom innerhalb der Akkumulatorzellen soviel Wärme erzeugt, dass die Außentemperatur innerhalb eines bestimmten Bereiches während des Ladevorgangs gehalten wird.
Aufgabe der Erfindung ist es ein Verfahren und eine Vorrichtung zum Laden eines wiederaufladbaren Akkumulators zu schaffen, bei dem mit geringem Aufwand der Ladevorgang in dem für die Ladung der Akkumulatorzellen geeigneten Temperaturbereich stattfindet.

Diese Aufgabe wird verfahrensmäßig mit den Merkmalen des Anspruches 1 und vorrichtungsmäßig mit den Merkmalen des Anspruches 3 gelöst. Die Unteransprüche beinhalten Weiterbildungen der Erfindung.
Bei der Erfindung wird unterhalb einer bestimmten Temperatur der Akkumulatorzellen der von einer Ladestromquelle gelieferte Ladestrom einer Heizeinrichtung, welche in Wärmekontakt mit den Akkumulatorzellen steht, zum Aufheizen der Akkumulatorzellen zugeführt und bei Erreichen der für die Ladung der Akkumulatorzellen geeigneten Temperatur wird der Ladestrom zum Laden der Akkumulatorzellen umgeschaltet. In vorteilhafter Weise kommt hierbei nur ein Versorgungsstromkreis, welcher den Ladestrom führt, zum Einsatz. Dieser gemeinsame Versorgungsstromkreis dient, je nachdem welche Temperatur die Akkumulatorzellen aufweisen, zum Aufheizen der Akkumulatorzellen oder zum Laden der Akkumulatorzellen. Dabei wird sowohl für das Aufheizen der Akkumulatorzellen als auch für das Laden der Akkumulatorzellen der von einer Ladestromquelle gelieferte Ladestrom verwendet.

In vorteilhafter Weise wird der Ladestrom dann zur Heizeinrichtung geführt, wenn die Temperatur der Akkumulatorzellen auf einen bestimmten Wert oberhalb der für die Ladung der Akkumulatorzellen zulässigen Temperatur abgesunken ist, und auf Ladebetrieb umgeschaltet werden, wenn eine bestimmte Temperatur (obere Grenze) erreicht wird. Beispielsweise soll die Ladung von Li-Ionenzellen bei einer Temperatur oberhalb 0°C erfolgen. Da während des Ladevorgangs dieser Li-Ionenzellen keine Eigenerwärmung auftritt, kann es bei tieferen Außentemperaturen und der nach Außen vorhandenen Wärmeableitung dazu kommen, dass die Temperatur unter die zulässige Grenze von 0°C fällt. In vorteilhafter Weise werden die Li-Ionenzellen dann wieder aufgeheizt, wenn ihre Temperatur auf etwa 10°C abgesunken ist. Dieser Wert oberhalb der zulässigen Temperatur kann auch eine andere Größe aufweisen und größer oder kleiner als 10°C sein, je nach Einsatzzweck des Akkumulators. Die Abschaltgrenze für die Heizung wird vorzugsweise höher, z.B. 15°C über der zulässigen Temperatur gewählt, so dass bei der Ladung von Li-Ionenzellen der Ladevorgang vorzugsweise innerhalb eines Temperaturbereiches mit 10°C als untere Grenze und 15°C als obere Grenze durchgeführt wird.
Die für die Ladung des Akkumulators eingesetzte Vorrichtung beinhaltet eine Ladestromquelle, welche an die Akkumulatorzellen den Ladestrom liefert. Ferner stehen die Akkumulatorzellen in Wärmeübergangskontakt mit einer Heizeinrichtung, wobei ein Temperaturfühler die Temperatur der Akkumulatorzellen erfasst. Ferner ist eine Steuereinrichtung vorgesehen, welche unterhalb einer bestimmten vom Temperaturfühler erfassen Temperatur eine Stromzuführung zur Heizeinrichtung für die Erwärmung der Akkumulatorzellen veranlasst.

Diese Steuereinrichtung besitzt bei der Erfindung einen Wechselschalter der mit seinem Mittelanschluss (Pol) an die Ladestromquelle, beispielsweise ein herkömmliches Ladegerät angeschlossen ist. Ein mit dem Mittelanschluss (Pol) elektrisch verbundener Wechselkontakt des Wechselschalters wird in Abhängigkeit von der vom Temperaturfühler erfassten Temperatur mit der Heizeinrichtung oder mit den Akkumulatorzellen verbunden. Dieser Wechselschalter ist in dem gemeinsamen Stromkreis für die Heizeinrichtung und für die Ladung der Akkumulatorzellen vorgesehen. Auf diese Weise erreicht man einen autarken Ladebetrieb, der von den gerade herrschenden Außentemperaturen nicht nachteilig beeinflusst wird.

Bei der Erfindung ist es vom Vorteil, dass auf der Ladeseite kein spezieller Heizkreis für die Aufheizung der Akkumulatorzellen erforderlich ist. Ferner sind herkömmliche Ladegeräte funktionell kompatibel mit der erfindungsgemäßen Vorrichtung. Die erfindungsgemäße Vorrichtung ist insbesondere einsetzbar bei Akkumulatoren, welche zur Stromversorgung von mobilen im Außeneinsatz verwendenden Geräten, insbesondere elektromedizinischen Geräten, beispielsweise bei der Versorgung von Verkehrsunfallopfern zum Einsatz kommen. Dabei kann das Ladegerät in einer Baueinheit mit dem vom Akkumulator zu versorgendem Gerät, insbesondere elektromedizinischem Gerät, vorliegen. Der Akkumulator ist in der Regel ebenfalls in dieser Baueinheit vorhanden. Es ist jedoch auch möglich die Ladestromquelle in einem separaten Ladegerät vorzusehen.

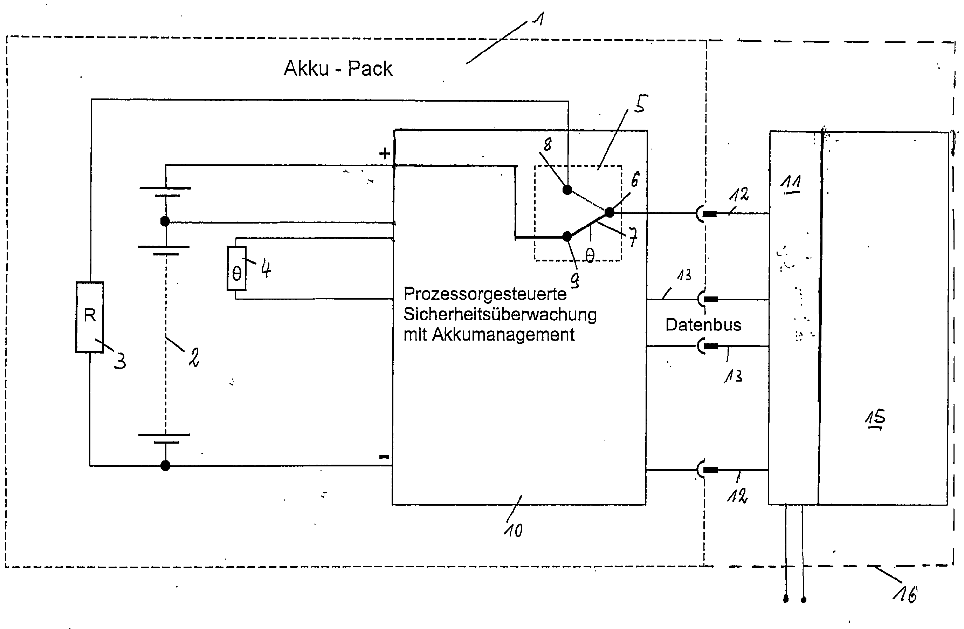

Anhand der Figur wird an einem Ausführungsbeispiel die Erfindung noch näher erläutert.

Die Figur zeigt ein Blockschaltbild, in welchem die Bestandteile der zur Durchführung des Verfahrens erforderlichen Vorrichtung und ihre Verbindung untereinander dargestellt sind. Die dargestellte Vorrichtung beinhaltet einen Akkumulator 1 mit Akkumulatorzellen 2, welche in Wärmeübergangsverbindung mit einer Heizeinrichtung 3 stehen. Mittels eines Temperaturfühlers 4 wird die jeweilige Temperatur der Akkumulatorzellen 2 erfasst und ein entsprechendes Signal an eine Steuereinrichtung 10 geliefert. In der Steuereinrichtung 10 ist ferner ein Wechselschalter 5 vorgesehen, welcher, wie noch zu erläutern wird, in Abhängigkeit von der vom Temperaturfühler 4 erfassten Temperatur der Akkumulatorzellen 2 betätigt wird.

Der Wechselschalter 5 besitzt einen Mittelanschluss 6 (Pol), einen Wechselkontakt 7, der in Abhängigkeit von der vom Temperaturfühler 4 gemessenen Temperatur an Anschlüsse 8 und 9 angelegt wird. Der Anschluss 8 ist mit der Heizeinrichtung 3 verbunden und der Anschluss 9 ist mit den Akkumulatorzellen 2 verbunden.

Die Betriebsspannung (Gleichspannung) für die Steuereinrichtung 10 und für den Temperaturfühler 4, wird wie schematisch in der Figur dargestellt ist, an den Akkumulatorzellen 2 abgegriffen.

Der Wechselschalter 5 ist mit seinem Mittelanschluss 6 (Pol) an eine Leitung eines gemeinsamen Stromkreises 12 angeschlossen. Im Stromkreis 12 fließt ein Ladestrom, welcher von einer Ladestromquelle 11 geliefert wird.

Die Ladestromquelle 11, welche als herkömmliches Ladegerät ausgebildet sein kann, kann separat vorgesehen sein oder vorzugsweise zusammen mit einem elektrischen Gerät 15, insbesondere einem elektromedizinischen Gerät, welches von den Akkumulatorzellen 2 mit Strom versorgt wird, in einer Baueinheit angeordnet sein. Hierzu können die Leitungen des Stromkreises 12 zum einen den von der Ladestromquelle 11 gelieferten Ladestrom in der einen Richtung und den von den Akkumulatorzellen 2 gelieferten Versorgungsstrom für das elektrische Gerät 15 in der anderen Richtung führen.

In Abhängigkeit von der vom Temperaturfühler 4 gemessenen Temperatur der Akkumulatorzellen wird der Wechselkontakt 7 des Wechselschalters 5 entweder an den Anschluss 8 für die Heizeinrichtung 3 oder an den Anschluss 9 für die Akkumulatorzellen 2 gelegt. Der Wechsel zwischen den beiden Anschlüssen 8 und 9 wird von der vorzugsweise prozessorgesteuerten Steuereinrichtung 10 gesteuert. Wenn die vom Temperaturfühler 4 gemessene Temperatur einen niedrigen Grenzwert hat, bei dem ein Ladebetrieb der Akkumulatorzellen 2 gerade noch zulässig ist, beispielsweise bei Li-Ionenzellen einen Wert von 0°C hat, wird durch die Steuereinrichtung 10 der Wechselkontakt 7 vom Anschluss 9 auf den Anschluss 8 für die Heizeinrichtung 3 umgeschaltet. In dieser Betriebsposition wird der Ladestrom, welcher von der Ladestromquelle 11 geliefert wird, der Heizeinrichtung 3 zugeführt, wodurch die Akkumulatorzellen 2 erwärmt werden. Die Erwärmung erfolgt auf einen höheren Temperaturwert für die Akkumulatorzellen 2, bei dem ein Ladebetrieb der Akkumulatorzellen 2 zulässig ist. Die Erwärmung der Akkumulatorzellen kann bis zu einem oberen Grenzwert erfolgen. Dieser Grenzwert kann beispielsweise bei 15°C im Falle von Li-Ionenzellen liegen. Bei diesem Temperaturwert, wird durch die Steuereinrichtung 10 der Wechselkontakt 7 des Wechselschalters 5 auf den Anschluss 9 gelegt, so dass der von der Ladestromquelle 11 gelieferte Ladestrom zur Aufladung der Akkumulatorzellen 2 diesen zugeführt wird.

Die Steuereinrichtung 10 beinhaltet neben dem erfindungsgemäß in ihr vorgesehenen Wechselschalter 5, eine vorzugsweise prozessorgesteuerte Sicherheitsüberwachung mit Akkumulatormanagement, welche in bekannter Weise ausgebildet sein können. Diese stellen die von den Akkumulatorzellen 2 gelieferte Spannung bzw. den von den Akkumulatorzellen 2 gelieferten Strom fest und entscheiden, ob ein Ladevorgang für die Akkumulatorzellen 2 durchgeführt werden soll. Falls ein solcher Ladevorgang durchzuführen ist und die Temperatur der Akkumulatorzellen 2 jedoch unterhalb einer für den Ladevorgang zulässigen Temperatur liegt, wird über den gemeinsamen Stromkreis 12, zunächst wie oben schon erläutert, die Heizeinrichtung 3 mit dem Ladestrom der Ladestromquelle 12 versorgt, bis die Akkumulatorzellen 2 auf eine für den Ladebetrieb zulässigen Temperatur gebracht sind. Sobald diese Temperatur erreicht wird, wird der Ladestrom über den Anschluss 9 des Wechselschalters 5 den Akkumulatorzellen 2 zugeführt.

Über einen Datenbus 13, welcher die Steuereinrichtung 10 mit der Ladestromquelle 11 verbindet, wird der erforderliche Ladebetrieb und die Lieferung des Ladestroms von der Ladestromquelle 11 initiiert. Auf diese Weise bilden die Ladestromquelle 11 und der mit dem Wechselschalter 5 und der Steuereinrichtung 10 ausgestattete Akkumulator 1 beim Ladevorgang ein autarkes System, bei dem bei automatisch in Gang gesetztem Ladebetrieb ferner dafür Sorge getragen wird, dass die Akkumulatorzellen nur bei für den Ladebetrieb zulässiger Temperatur aufgeladen werden. Die Ladestromquelle 11, welcher als herkömmliches Ladegerät ausgebildet sein kann, kann in herkömmlicher Weise an eine Stromversorgungsquelle 14, beispielsweise an das Netz oder eine mobile Stromversorgungsquelle 14, beispielsweise in einem Unfallfahrzeug, angeschlossen werden. Der Akkumulator 1 ist so ausgebildet, dass er in einer Baueinheit in herkömmliche elektrische Geräte 15, insbesondere elektromedizinische Geräte 15, welche mittels Akkumulator betrieben werden, eingebaut werden kann. Hierzu können der Akkumulator 1 und das von ihm mit Strom zu versorgende elektrische Gerät 15 in einer Baueinheit 16 untergebracht sein. Auch die Ladestromquelle 11 (Ladegerät) kann in dieser Baueinheit 16 angeordnet werden.

Bei elektromedizinischen Geräten beträgt der Ladestrom etwa 3 Ampere bei etwa 8 Volt Ladespannung, so dass eine Ladeleistung von ca. 25 Watt vom Ladegerät geliefert wird.

### Bezugszeichenliste

- 1: Akkumulator
- 2: Akkumulatorzellen
- 3: Heizeinrichtung
- 4: Temperaturfühler
- 5: Wechselschalter
- 6: Mittelanschluss (Pol)
- 7: Wechselkontakt
- 8: Anschluss für Heizeinrichtung
- 9: Anschluss für Akkumulatorzellen
- 10: Steuereinrichtung
- 11: Ladestromquelle
- 12: Gemeinsamer Stromkreis
- 13: Datenbus
- 14: Stromversorgungsquelle (Netz)
- 15: Elektrisches Gerät
- 16: Baueinheit

## Patentansprüche

1. Verfahren zum Laden eines wiederaufladbaren Akkumulators (1) zur Stromversorgung eines mobilen elektronischen Geräts, wie es beispielsweise bei der Versorgung von Verkehrsunfallopfern zum Einsatz kommt, mittels einer Ladestromquelle (11), bei dem die Temperatur beheizbarer Akkumulatorzellen (2) ermittelt und in einem zulässigen Temperaturbereich die Akkumulatorzellen (2) mit einem elektrischen Ladestrom von der Ladestromquelle (11) aufgeladen werden, wobei der Ladestrom zum Aufheizen der Akkumulatorzellen (2) und zum Laden der Akkumulatorzellen (2) über einen gemeinsamen Versorgungsstromkreis (12) einem Wechselschalter (5) für die Umschaltung zwischen Beheizung und Ladung der Akkumulatorzellen (2) zugeführt wird, **dadurch gekennzeichnet, dass** im Akkumulator (1) eine den Wechselschalter (5) aufweisende Steuereinrichtung (10) integriert ist und einen automatischen Umschaltbetrieb des Wechselschalters (5) in Abhängigkeit von der Temperatur der Akkumulatorzellen (2) ausführt, derart, dass unterhalb einer bestimmten für die Ladung der Akkumulatorzellen (2) zulässigen Temperatur der Akkumulatorzellen (2) der Ladestrom einer Heizeinrichtung (3) zum Aufheizen der Akkumulatorzellen (2) zugeführt wird und bei Erreichen der bestimmten für die Ladung der Akkumulatorzellen (2) zulässigen Temperatur der Wechselschalter (5) zum Laden der Akkumulatorzellen (2) umgeschaltet wird, wobei der Ladestrom dann der Heizeinrichtung (3) zugeführt wird, wenn die Temperatur der aufgeheizten Akkumulatorzellen (2) bei tieferen Außentemperaturen während des Ladevorgangs auf einen bestimmten Wert oberhalb der für die Ladung der Akkumulatorzellen (2) zulässigen Temperatur abgesunken ist, wobei der Ladestrom bei einer bestimmten unteren für den Ladevorgang zulässigen Temperatur zum Aufheizen der Akkumulatorzellen (2) umgeschaltet wird und bei einer bestimmten darüber liegenden für den Ladevorgang zulässigen Temperatur zum Laden der Akkumulatorzellen (2) umgeschaltet wird.

2. Verfahren nach Anspruch 1, **dadurch gekennzeichnet, dass** die untere Temperatur 10°C über der für den Ladevorgang zulässigen Grenztemperatur und die darüber liegende Temperatur 15°C über der für den Ladevorgang zulässigen Grenztemperatur liegt.

3. Vorrichtung zum Laden eines wiederaufladbaren Akkumulators (1) zur Stromversorgung eines mobilen elektronischen Geräts, wie es beispielsweise bei der Versorgung von Verkehrsunfallopfern zum Einsatz kommt, mit einer Ladestromquelle (11), welche an die Akkumulatorzellen (2) einen Ladestrom liefert, einer mit den Akkumulatorzellen (2) in thermischem Kontakt stehenden Heizeinrichtung (5), einem Temperaturfühler (4) zur Erfassung der Temperatur der Akkumulatorzellen (2) und einer Steuereinrichtung (10), die einen in einem gemeinsamen Stromkreis (12) für die Heizeinrichtung (3) und die Ladung der Akkumulatorzellen (2) vorgesehenen Wechselschalter (5) aufweist, dessen Mittelanschluss (6) an die Ladestromquelle (11) angeschlossen ist, und ein mit dem Mittelanschluss (6) verbundener Wechselkontakt (7) des Wechselschalters (5) an die Heizeinrichtung (3) oder an die Akkumulatorzellen (2) anschließbar ist, **dadurch gekennzeichnet, dass** die Steuereinrichtung (10) im Akkumulator (1) integriert ist und für einen automatischen Umschaltbetrieb des Wechselschalters (5) in Abhängigkeit von der vom Temperaturfühler (4) gemessenen Temperatur ausgebildet ist, derart, dass unterhalb einer bestimmten für die Ladung der Akkumulatorzellen (2) zulässigen Temperatur der Akkumulatorzellen (2) der Ladestrom der Heizeinrichtung (3) zum Aufheizen der Akkumulatorzellen (2) zugeführt wird und bei Erreichen der bestimmten für die Ladung der Akkumulatorzellen (2) zulässigen Temperatur der Ladestrom zum Laden der Akkumulatorzellen (2) umgeschaltet wird, wobei der Ladestrom dann der Heizeinrichtung (3) zugeführt wird, wenn die Temperatur der aufgeheizten Akkumulatorzellen (2) während des Ladevorgangs bei tieferen Außentemperaturen auf einen bestimmten Wert oberhalb der für die Ladung der Akkumulatorzellen (2) zulässigen Temperatur abgesunken ist, wobei der Ladestrom bei einer bestimmten unteren für den Ladevorgang zulässigen Temperatur zum Aufheizen der Akkumulatorzellen (2) umgeschaltet wird und bei einer bestimmten darüber liegenden für den Ladevorgang zulässigen Temperatur zum Laden der Akkumulatorzellen (2) umgeschaltet wird.

4. Vorrichtung nach Anspruch 3, **dadurch gekennzeichnet, dass** die Ladestromquelle (11) und ein an den Akkumulator (1) zur Stromversorgung angeschlossenes Gerät (15) in einer Baueinheit vorgesehen sind.

5. Vorrichtung nach Anspruch 4, **dadurch gekennzeichnet, dass** der Akkumulator (1) in der Baueinheit angeordnet ist.

## Claims

1. Method for charging a rechargeable accumulator (1) for supplying power to a mobile electronic device, such as it is e.g. employed when providing medical aid to the victims of accidents, by means of a source of charging current (11), in which the temperature of heatable accumulator cells (2) is determined and the accumulator cells (2) are charged in a permissible temperature range with an electric charging current from the source of charging current (11), wherein the charging current for heating the accumulator cells (2) and for charging the accumulator cells (2) is applied via a joint current supply circuit (12) to an alteration switch (5) for switching between heating and charging of the accumulator cells (2), **characterized in that** in the accumulator (1) is integrated a control unit (10), which comprises the alteration switch (5) and which performs an automatic switch operation of the alteration switch (5) in dependence of the temperature of the accumulator cells (2) in such a manner that, below a particular temperature of the accumulator cells (2) which is permissible for the charging of the accumulator cells (2), the charging current is applied to a heating arrangement (3) for heating the accumulator cells (2), and **in that**, when reaching the particular temperature which is permissible for the charging of the accumulator cells (2), the alteration switch (5) is switched for charging the accumulator cells (2), wherein the charging current is applied to the heating arrangement (3) when the temperature of the heated accumulation cells (2) has dropped at lower outer temperatures during the charging process to a particular value above the temperature which is permissible for the charging of the accumulator cells (2), wherein the charging current is switched at a particular lower temperature which is permissible for the charging process to heat the accumulator cells (2) and is switched at a particular higher temperature which is permissible for the charging process to charge the accumulator cells (2).

2. Method according to claim 1, **characterized in that** the lower temperature is 10°C above a limit temperature which is permissible for the charging process and the higher temperature is 15°C above the limit temperature which is permissible for the charging process.

3. Apparatus for charging a rechargeable accumulator (1) for supplying power to a mobile electronic device, such as it is e.g. employed when providing medical aid to the victims of accidents, with a source of charging current (11), which supplies a charging current to the accumulator cells (2), a heating arrangement (3) which is in thermal contact with the accumulator cells (2), a temperature sensor (4) for acquiring the temperature of the accumulator cells (2), and a control arrangement (10), which comprises an alteration switch (5) that is provided in a joint current circuit (12) for the heating arrangement (3) and the charging of the accumulator cells (2), the central connector (6) of which is connected to the source of charging current (11), wherein an alteration contact (7) of the alteration switch (5), which his connected to the central connector (6), is connectable to the heating arrangement (3) or to the accumulator cells (2), **characterized in that** the control arrangement (10) is integrated into the accumulator (1) and is arranged for an automatic switch operation of the alteration switch (5) in dependence of the temperature measured by the temperature sensor (4) in such a manner that, below a particular temperature of the accumulator cells (2) which is permissible for the charging of the accumulator cells (2), the charging current is applied to the heating arrangement (3) for heating the accumulator cells (2), and **in that**, when reaching the particular temperature which is permissible for the charging of the accumulator cells (2), the charging current is switched for charging the accumulator cells (2), wherein the charging current is applied to the heating arrangement (3) when the temperature of the heated accumulation cells (2) has dropped at lower outer temperatures during the charging process to a particular value above the temperature which is permissible for the charging of the accumulator cells (2), wherein the charging current is switched at a particular lower temperature which is permissible for the charging process to heat the accumulator cells (2) and is switched at a particular higher temperature which is permissible for the charging process to charge the accumulator cells (2).

4. Apparatus according to claim 3, **characterized in that** the source of charging current (11) and a device that is connected to the accumulator (1) for supplying power are provided in a single constructional unit.

5. Apparatus according to claim 4, **characterized in that** the accumulator (1) is arranged in the constructional unit.

## Revendications

1. Procédé de chargement d'un accumulateur rechargeable (1) pour alimenter en courant un appareil électronique mobile, tel qu'il est utilisé par exemple pour fournir une aide médicale à des victimes d'accidents de la route, au moyen d'une source de courant de charge (11), dans lequel la température d'éléments d'accumulateur (2) chauffants est déterminée et les éléments d'accumulateur (2) sont chargés, dans une plage de température admissible, d'un courant de charge électrique provenant de la source de courant de charge (11), dans lequel le courant de charge pour chauffer les éléments d'accumulateur (2) et pour charger les éléments d'accumulateur (2) est amené via un circuit de courant d'alimentation (12) commun à un commutateur (5) destiné à commuter entre le chauffage et la charge des éléments d'accumulateur (2), **caractérisé par le fait qu'**un dispositif de commande (10) est intégré à l'accumulateur (1), qui comprend le commutateur (5) et qui met en oeuvre une opération de commutation automatique du commutateur (5) en fonction de la température des éléments d'accumulateur (2) de telle sorte que, en dessous d'une température déterminée des éléments d'accumulateur (2) qui est admissible pour la charge des éléments d'accumulateur (2), le courant de charge est amené à un dispositif de chauffage (3) pour chauffer les éléments d'accumulateur (2), et que, lorsque la température déterminée admissible pour la charge des éléments d'accumulateur (2) est atteinte, le commutateur (5) est commuté pour charger les éléments d'accumulateur (2), dans lequel le courant de charge est amené au dispositif de chauffage (3) lorsque la température des éléments d'accumulateur (2) chauffés a baissé et est passée, à des températures extérieures plus basses pendant l'opération de charge, à une valeur déterminée supérieure à la température admissible pour la charge des éléments d'accumulateur (2), dans lequel, à une température déterminée inférieure qui est admissible pour l'opération de charge, le courant de charge est commuté pour chauffer les éléments d'accumulateur (2) et, à une température déterminée située là-dessus qui est admissible pour l'opération de charge, il est commuté pour charger les éléments d'accumulateur (2).

2. Procédé selon la revendication 1, **caractérisé par le fait que** la température inférieure est située 10 °C au-dessus de la température limite admissible pour l'opération de charge, et la température située là-dessus est située 15 °C au-dessus de la température limite admissible pour l'opération de charge.

3. Dispositif de chargement d'un accumulateur rechargeable (1) pour alimenter en courant un appareil électronique mobile, tel qu'il est utilisé par exemple pour fournir une aide médicale à des victimes d'accidents de la route, comprenant une source de courant de charge (11) qui fournit un courant de charge aux éléments d'accumulateur (2), un dispositif de chauffage (3) qui est en contact thermique avec les éléments d'accumulateur (2), un capteur de température (4) destiné à détecter la température des éléments d'accumulateur (2), et un dispositif de commande (10) qui comprend un commutateur (5) qui est prévu dans un circuit électrique (12) commun pour le dispositif de chauffage (3) et pour la charge des éléments d'accumulateur (2) et dont la borne centrale (6) est connectée à la source de courant de charge (11), dans lequel un contact inverseur (7) du commutateur (5), qui est relié à la borne centrale (6), peut être connecté au dispositif de chauffage (3) ou aux éléments d'accumulateur (2), **caractérisé par le fait que** le dispositif de commande (10) est intégré à l'accumulateur (1) et est conçu pour un fonctionnement de commutation automatique du commutateur (5) en fonction de la température mesurée par le capteur de température (4), de telle sorte que, en dessous d'une température déterminée des éléments d'accumulateur (2) qui est admissible pour la charge des éléments d'accumulateur (2), le courant de charge est amené au dispositif de chauffage (3) pour chauffer les éléments d'accumulateur (2), et que, lorsque la température déterminée admissible pour la charge des éléments d'accumulateur (2) est atteinte, le courant de charge est commuté pour charger les éléments d'accumulateur (2), dans lequel le courant de charge est amené au dispositif de chauffage (3) lorsque la température des éléments d'accumulateur (2) chauffés a baissé et est passée, pendant l'opération de charge à des températures extérieures plus basses, à une valeur déterminée supérieure à la température admissible pour la charge des éléments d'accumulateur (2), dans lequel, à une température déterminée inférieure qui est admissible pour l'opération de charge, le courant de charge est commuté pour chauffer les éléments d'accumulateur (2) et, à une température déterminée située là-dessus qui est admissible pour l'opération de charge, il est commuté pour charger les éléments d'accumulateur (2).

4. Dispositif selon la revendication 3, **caractérisé par le fait que** ladite source de courant de charge (11) et un appareil (15) connecté à l'accumulateur (1) pour l'alimentation en courant sont prévus dans une seule unité physique.

5. Dispositif selon la revendication 4, **caractérisé par le fait que** l'accumulateur (1) est agencé à l'intérieur de l'unité physique.
